(19) **Europäisches Patentamt / European Patent Office / Office européen des brevets**

(11) **EP 1 336 548 B1**

(12) # EUROPÄISCHE PATENTSCHRIFT

(45) Veröffentlichungstag und Bekanntmachung des Hinweises auf die Patenterteilung:
**07.02.2007 Patentblatt 2007/06**

(51) Int Cl.:
**B62D 6/04** (2006.01)

(21) Anmeldenummer: **03001132.4**

(22) Anmeldetag: **20.01.2003**

(54) **Gierdämpfung bei der Fahrzeuglenkung**

Yaw damping for vehicle steering

Amortissement de lacet pour direction de véhicule

(84) Benannte Vertragsstaaten:
**AT BE BG CH CY CZ DE DK EE ES FI FR GB GR HU IE IT LI LU MC NL PT SE SI SK TR**

(30) Priorität: **18.02.2002 DE 10206730**

(43) Veröffentlichungstag der Anmeldung:
**20.08.2003 Patentblatt 2003/34**

(73) Patentinhaber: **Deutsches Zentrum für Luft- und Raumfahrt e.V.**
**51147 Köln (DE)**

(72) Erfinder: **Ackermann, Jürgen, Prof. Dr.**
**82211 Herrsching (DE)**

(74) Vertreter: **Rupp, Christian et al**
**Mitscherlich & Partner**
**Patent- und Rechtsanwälte**
**Sonnenstrasse 33**
**80331 München (DE)**

(56) Entgegenhaltungen:
EP-A- 0 846 610          DE-C- 4 127 750
US-A- 4 941 097

• ACKERMANN J ET AL: "FAHRSICHERHEIT DURCH ROBUSTE LENKREGELUNG" AUTOMATISIERUNGSTECHNIK - AT, OLDENBOURG VERLAG. MUNCHEN, DE, Bd. 44, Nr. 5, 1. Mai 1996 (1996-05-01), Seiten 219-225, XP000583464 ISSN: 0178-2312

## Beschreibung

Die vorliegende Erfindung bezieht sich allgemein auf die Steuerung des dynamischen Verhaltens eines Fahrzeugs um eine definierte Achse. Ein Beispiel dafür ist die Steuerung des Gierverhaltens eines Straßenfahrzeugs mit Vorderachslenkung.

Eine häufige Unfallursache im Straßenverkehr ist das Schleudern von Autos. Dabei folgt die Drehung des Fahrzeugs um die Hochachse (Gierbewegung) nicht dem vom Fahrer über das Lenkrad bzw. einer automatischen Fahrzeugsteuerung vorgegebenen Wunschverhalten. Ursache dafür kann z.B. Straßenglätte (Eis, nasses Laub) oder ein Störmoment (Seitenwind, Reifendruckverlust) sein. Fahrer-Unterstützungssysteme, die über die Lenkung eingreifen, können den Vorderrad-Einschlag schneller und präziser korrigieren als der Mensch, wenn eine Abweichung zwischen der gewünschten Gier-Drehgeschwindigkeit (Gierrate) und der Wunsch-Gierrate auftritt. Ein Problem bei der Auslegung solcher Regelungssysteme ist es, dass sie zwar bei bekannten Fahrzeugparametern (z. B. Reifendruck und Reifenprofil) und Betriebsbedingungen (z. B. Geschwindigkeit, Straßenzustand, Zuladung, Anhängerbetrieb) das bestmögliche dynamische Verhalten sicherstellen, bei wesentlichen Abweichungen aber das Verhalten sogar verschlechtern können. Eine wesentliche Forderung an ein Lenk-Regelungsverfahren ist daher seine Robustheit gegenüber den genannten Abweichungen von nominalen Parameterwerten und Betriebszuständen.

In den Markt eingeführt sind Schleuder-Vermeidungssysteme ESP (Electronic Stability Program), die über das Bremsen (gegebenenfalls auch Beschleunigen) einzelner Räder eingreifen. Ihr wichtigster Vorteil ist, dass sie mit der vorhandenen ABS-Bremse bereits über einen Aktuator verfügen und damit preisgünstig hergestellt werden können. Im Vergleich dazu hat ein Eingriff in die Lenkung folgende prinzipbedingte Vorteile:

- Es besteht die Möglichkeit des Dauerbetriebs zur Entlastung des Fahrers bei böigem Wind, Anhängerbetrieb und schlechter Straßenoberfläche. Damit entfällt zugleich das irritierende und unkomfortable Einschalten des ESP bei beginnendem Schleudern.

- Der Hebelarm (etwa das Doppelte im Vergleich zum Bremseingriff) ist größer und damit die Reifenkraft zur Erzeugung eines Korrekturmoments kleiner.

- Bremswege durch Momentenkompensation bei der μ-Split-Bremsung sind kürzer.

- Es besteht ein geringerer Reifen- und Bremsbelagverschleiß sowie keine Energieverschwendung durch zu viel Abbremsung.

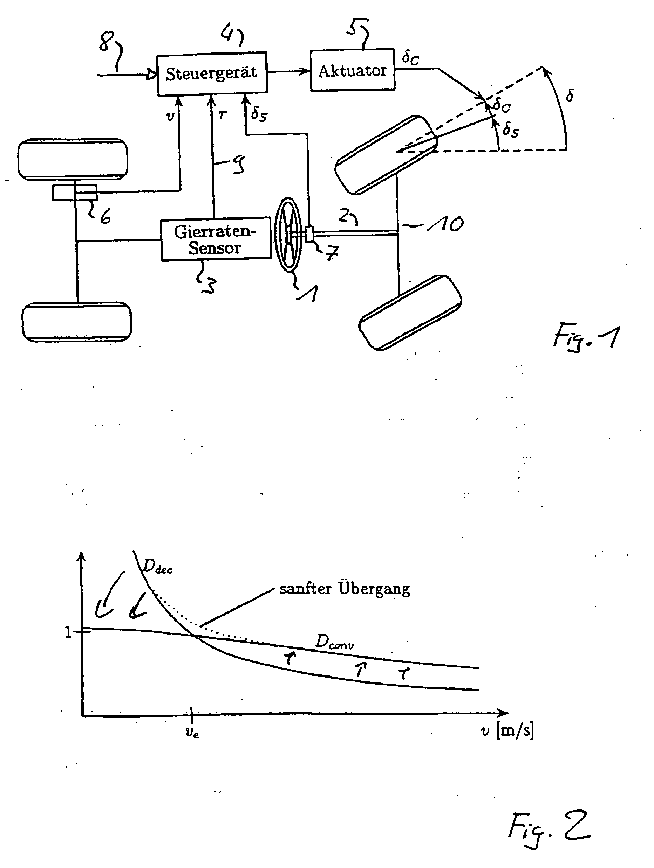

Figur 1 der beigefügten Zeichnungen zeigt die wesentlichen Komponenten einer solchen "aktiven" Lenkung. Vom Fahrer wird über ein Betätigungsorgan (Lenkrad) 1 über einen Steuerübertragungsstrang 2 und eine Vorderradlenkung 10 ein Vorderrad-Einschlagwinkel $\delta_S$ kommandiert. Hinzu addiert wird ein Korrekturwinkel $\delta_C$, der in einem Regler (Steuergerät) 4 aus verschiedenen Sensordaten wie bzw. der Geschwindigkeit $v$ mittels eines ABS-Sensors 6, der Gierrate $r$ mittels eines Gierratensensors 3 etc. berechnet wird. Die Addition zum tatsächlichen Einschlagwinkel

$$\delta = \delta_S + \delta_C$$

kann mechanisch (Überlagerungsgetriebe) oder elektrisch (Steer-by Wire) mittels eines Aktuators 5 erfolgen.

Bei der in Figur 1 gezeigten Überlagerungslenkung stellt der Aktuator 5 nur den Korrekturwinkel $\delta_C$. Alternativ kann ein Steer-by-Wire-System verwendet werden, bei dem die mechanische Verbindung zwischen Lenkrad und Vorderradeinschlag zumindest teilweise aufgehoben ist. Die Addition ($\delta = \delta_S + \delta_C$) geschieht in diesem Fall elektrisch im Steuergerät 4 und der Aktuator 5 verstellt somit den gesamten Winkel $\delta$.

Die in Figur 1 schematisch gezeigten Sensoren für den kommandierten Lenkwinkel $\delta_S$, die Gierrate $r$ und die Fahrgeschwindigkeit $v$ (aus der Raddrehzahl mit Ungenauigkeit durch Lenkschlupf) sind aus dem Stand der Technik grundsätzlich bekannt. Die dynamischen Eigenschaften des Fahrzeugs mit aktiver Lenkung und deren Robustheit gegenüber veränderlichen Fahrzeugparametern und Betriebsbedingungen hängen bei einem solchen mechatronischen System entscheidend von dem im Rechner des Steuergeräts 4 implementierten Steuerungs- und Regelungsgesetzen ab. Die Erfindung bezieht sich insbesondere auf die Ausbildung der im Steuergerät 4 implementierten Funktionen.

Beim Ansatz einer Reglerstruktur kann man grundsätzlich zwei Vorgehensweisen unterscheiden:

a) Erkennen der Störungsursachen und gesteuerte Störungskompensation und

b) Erkennen der Störungswirkung und geregelte Kompensation der Wirkung.

Die vorliegende Erfindung befasst sich dabei mit der zuletzt genannten Alternative, so dass im folgenden nur deren Hintergrund erläutert werden soll.

Die Wirkung aller genannten Störungen ist eine Abweichung der gemessenen Gierrate $r$ von der vom Fahrer gewünschten Gierrate $r_{ref}$, die aus dem vom Fahrer eingestellten Lenkradwinkel abgeleitet wird. Diese Abweichung wird so schnell wie möglich zu Null gemacht, ohne dass ihre Ursache bestimmt wird, indem die Differenz in einen Regler eingebeben wird, der abhängig von der Differenz einen Lenkeingriff steuert.

Damit werden auch Störmomente und Parameteränderungen erfasst, für die kein spezieller Sensor existiert oder vorgesehen wurde (Beispiele: Reifendruckverlust, geänderte Zuladung, Eisreste auf sonst trockener Straße, böiger Wind, seitliche Kräfte an der Anhängekupplung etc.). Diese Technologie ist aus einer Anzahl von Dokumenten aus dem Stand der Technik bekannt. Als Beispiele seien dafür EP 0 474 130 (und XP 000 583 464) AT Automatisierungstechnik 44 (96) Seite 219-225 May, No 5 München), EP 0 559 114, EP 0 614 795 und EP 0 846 610 erwähnt. Die Lenkregelung gemäß EP 0 474 130 und EP 0 559 114, die für Fahrzeuge mit zusätzlicher Hinterradlenkung entworfen wurde, genügt dabei erhöhten Robustheitsanforderungen. In EP 0 614 795 wurde eine Beschleunigungs-Rückführung hinzugenommen.

Sämtliche drei zuletzt genannten Dokumente schlagen eine Hinterradlenkung für eine gute Bedämpfung der Gierbewegung vor. Es kann unabhängig von der robusten Entkopplung von Gier- und Seitenbewegung jeder gewünschte Verlauf der Gierdämpfung $D(v)$ in Abhängigkeit von der Geschwindigkeit $v$ erreicht werden. Die zusätzliche Hinterradlenkung stellt jedoch höhere Anforderungen an Komplexität und Kosten, die wirtschaftlich ggf. nicht zu erfüllen sind.

Bei einer Vorderradlenkung dagegen muss ein Kompromiss zwischen der idealen robusten Entkopplung unter Vorgabe eines Dämpfungsverlaufs bezüglich der Gierdämpfung $D(v)$ erreicht werden. Figur 2 zeigt die oberhalb einer Geschwindigkeit $v_e$ reduzierte Dämpfung des entkoppelten Fahrzeugs. Diese Absenkung der Gierdämpfung bei höheren Geschwindigkeiten zeigt sich in der Praxis dadurch, dass eine Schwingung um die Gierachse nur relativ langsam wieder abklingt. In dieser Zeit kann es ggf. zu einer Überreaktion des Fahrers in dem Bestreben kommen, der Gierschwingung entgegen zu wirken.

Aus EP 0 846 610 ist ein Verfahren bekannt, mit dem ein gewünschter Verlauf der Gierdämpfung $D(v)$ erreicht werden kann. Dies wird durch die Kürzung eines Pols in der Übertragungsfunktion $G_{\delta a}(s)$ des robust entkoppelten Systems vom Lenkwinkel $\delta_S$ zur Querbeschleunigung $a_{yP}$ am Entkopplungspunkt erreicht (zur Erläuterung des Begriffes "Entkopplungspunkt" wird auf diese Schrift verwiesen). Allerdings weist dieses bekannte Verfahren den Nachteil auf, dass gleichzeitig mit einer Veränderung der Gierdämpfung $D(v)$ weitere Systemeigenschaften, insbesondere die natürliche Frequenz der Gierschwingung, verändert werden.

Es ist Aufgabe der vorliegenden Erfindung, unter Verwendung der Haupt-Lenkeinrichtung die Steuerung des dynamischen Verhaltens eines Fahrzeugs um eine definierte Achse hinsichtlich des Schwingungsverhaltens um diese Achse zu verbessern.

Die Erfindung ist beispielsweise auf Kfzs mit Vorderradlenkung (ohne zusätzliche Hinterradlenkung) wie auch auf andere Fahrzeuge anwendbar, z.B. auf die Beeinflussung der Gierbewegung eines Schiffes durch das Ruder oder eines Flugzeuges durch das Seitenruder. Ebenso gilt das für die Nickbewegung des Flugzeuges durch das Höhenruder. Auch die Strahlablenkung von Triebwerken von Raketen oder Flugzeugen gehört dazu. Allgemein wird die Wirkung von Störmomenten um eine geometrische Achse des Fahrzeugs indirekt als Abweichung der Drehgeschwindigkeit (gemessen mit einem Drehratsensor) von einer vom Benutzer oder einem automatischen Leitsystem gewünschten Drehgeschwindigkeit festgestellt und durch einen Zusatzwinkel des Hauptsteuerorgans kompensiert. Nicht gemeint ist die Verwendung zusätzlicher Steuerorgane wie Hinterradlenkung, seitliche Düsen am Schiff, Ruder an zusätzlichen Canards (Entenflügeln) etc.

In dem Anwendungsfall Kfz mit Vorderradlenkung kann dies bedeuten, ein auf die Robustheit hin ausgelegtes Regelungssystem im oberen Bereich der Geschwindigkeit $v$ so zu modifizieren, dass die geschwindigkeitsabhängige Gierdämpfung $D(v)$ verbessert wird bzw. die Funktion $D(v)$ nach Wunsch des Entwurfsingenieurs festgelegt werden kann. Schließlich kann die Kennlinie $D(v)$ auch während der Fahrt veränderbar (z.B. umschaltbar) gemacht werden, um dem Fahrer bzw. einer automatischen Fahrzeugsteuerung Optionen für sportlichere oder komfortablere (in jedem Fall aber sichere Fahrweise) zu geben.

Gemäß der Erfindung kann dabei der Dämpfungsverlauf $D(v)$ vorgegeben werden, ohne gleichzeitig andere Eigenschaften der Fahrzeug-Querdynamik zu verändern. Dies macht einerseits den Entwurfsprozess transparent und erlaubt andererseits eine gefahrlose Veränderung des Dämpfungsverlaufs während der Fahrt.

Genauer gesagt ist gemäß einem ersten Aspekt der Erfindung eine geregelte Einrichtung zur Steuerung des dynamischen Verhaltens eines Fahrzeugs um eine definierte Achse vorgesehen. Ein Betätigungsorgan dient dabei zum Ansteuern eines verstellbaren Steuerelements durch einen Benutzer, wobei das Betätigungsorgan mit dem Steuerelement durch einen Steuerübertragungsstrang verbunden ist und das Steuerelement das Verhalten des Fahrzeugs um die definierte Achse beeinflusst. Ein Sensor erfasst die Drehrate des Fahrzeugs um die definierte Achse. Ein weiterer Sensor erfasst ein für die Stellung des Betätigungsorgans repräsentatives Stellsignal. Ein Regler führt ein Signal, das von der erfassten Drehrate abhängt, auf den steuerübertragenden Strang zurück. Der Regler weist dabei eine Funktion zur gezielten Beeinflussung der geschwindigkeitsabhängigen Dämpfung der Bewegung des Fahrzeugs um die definierte Achse unabhängig von den übrigen Eigenschaften des Fahrzeugs auf.

Gemäß einem weiteren Aspekt der Erfindung weist der Regler eine Funktion auf, um die geschwindigkeitsabhängige Dämpfung der Bewegung des Fahrzeugs um die definierte Achse zumindest in einem höheren Geschwindigkeitsbereich unabhängig von den übrigen Eigenschaften des Fahrzeugs um diese definierte Achse anzuheben.

Weiterhin betrifft die Verbindung Verfahren zur Steuerung des dynamischen Verhaltens eines Fahrzeugs um eine definierte Achse sowie ein Computer-Softwareprogramm, das derartige Verfahren implementiert, wenn es auf einer Recheneinrichtung läuft.

Weitere Merkmale, Eigenschaften und Vorteile der folgenden Erfindung werden nunmehr, bezugnehmend auf ein Ausführungsbeispiel und die Figuren der begleitenden Zeichnungen, näher erläutert:

Figur 1     zeigt schematisch die Komponenten einer aktiven Lenkung,

Figur 2     zeigt die Gierdämpfung bei einem konventionellen unge-regelten Fahrzeug sowie bei einem ideal entkoppelten Fahr-zeug,

Figur 3     zeigt die Zähler- und Nennerpolynome der Übertragungs-funktionen für das robust entkoppelte System und

Figur 4     zeigt die Erzielung einer Wunschdämpfung durch einen erfindungsgemäßen Regler.

Im folgenden wird die Erfindung anhand eines von einem Fahrer gelenkten Straßenfahrzeugs erläutert. Es ist indessen ersichtlich, dass sich die Erfindung zwanglos bei anderen Fahrzeugen (Schiffe, Tragflügelboote, U-Boote, Hubschrauber, Flugzeuge, Panzer, Sonderfahrzeuge, Gabelstapler oder andere Fahrzeuge mit reiner Hinterradlenkung) und bezüglich anderer Drehachsen (Rollen, Nicken, ...) anwenden lässt.

Die Erfindung kann gleichermaßen im Sinne einer unterlagerten Regelung bei automatisch bahnfolgegeregelten Fahrzeugen (bzw. Flugzeugen mit Autopilot) angewandt werden. In diesem Falle ist unter dem Begriff "Betätigungsorgan" ein Steuereingang zu verstehen. Die durch die Erfindung erzielten Erfolge bestehen gleichermassen bei fahrergesteuerten wie bei automatisch gesteuerten Fahrzeugen.

Für die allgemeine Beschreibung der robusten Entkopplung, auch bei unbekannten nichtlinearen Reifenkennlinien sowie Brems- und Beschleunigungsvorgängen, wird auf EP 0 846 610 verwiesen. Hier wird eine vereinfachte linearisierte Darstellung gegeben, die direkt auf die doppelte Kürzungskompensation für einen Pol und eine Nullstelle zielt.

Das klassische Einspurmodell der Lenkung lautet

$$\begin{bmatrix} \dot{\beta} \\ \dot{r} \end{bmatrix} = \begin{bmatrix} a_{11} & a_{12} \\ a_{21} & a_{22} \end{bmatrix} \cdot \begin{bmatrix} \beta \\ r \end{bmatrix} + \begin{bmatrix} b_{11} \\ b_{21} \end{bmatrix} \cdot \delta + \begin{bmatrix} 0 \\ b_D \end{bmatrix} \cdot M_{zD} \qquad (1)$$

mit

$$a_{11} := \frac{-\mu \cdot (c_R + c_F)}{m \cdot v},$$

$$a_{12} := -1 + \mu \cdot \frac{c_R \cdot \ell_R - c_F \cdot \ell_F}{m \cdot v^2},$$

$$a_{21} := \mu \cdot \frac{c_R \cdot \ell_R - c_F \cdot \ell_F}{J},$$

$$a_{22} := -\mu \cdot \frac{c_R \cdot \ell_R^2 - c_F \cdot \ell_F^2}{J \cdot v} \, ,$$

$$b_{11} := \mu \cdot \frac{c_F}{m \cdot v} \, ,$$

$$b_{21} := \mu \cdot \frac{c_F \cdot \ell_F}{J} \quad \text{und}$$

und

$$b_D := \frac{1}{J} \, .$$

Darin ist

| | |
|---|---|
| $\beta$ | Schwimmwinkel |
| $r$ | Gierrate |
| $\delta$ | Vorderrad-Einschlagwinkel |
| $M_{zD}$ | Störmoment um die Hochachse |
| $\mu$ | Kraftschlusskoeffizient ($\mu \leq 1$) |
| $c_F$ | Schräglaufsteifigkeit vorn (front) |
| $c_R$ | Schräglaufsteifigkeit hinten (rear) |
| $m$ | Fahrzeugmasse |
| $v$ | Fahrzeuggeschwindigkeit |
| $J$ | Trägheitsmoment um die Hochachse |
| $\ell_R$ ($\ell_F$) | Abstand der Hinterachse (Vorderachse) vom Schwerpunkt (SP) |

Der Entkopplungspunkt liegt in einem Abstand

$$\ell_{DP} = \frac{J}{m \cdot \ell_R}$$

vor dem Schwerpunkt. Die Querbeschleunigung am Entkopplungspunkt ist

$$a_{yDP} = \frac{\mu \cdot c_F \cdot \ell}{m \cdot \ell_R} \cdot (\delta - \beta - \ell_F \cdot r/v) + \frac{M_{zD}}{m \cdot \ell_R} \, . \tag{3}$$

Das robust entkoppelnde Regelgesetz nach EP 0 846 610 ist

$$\delta(s) = \delta_S - \frac{n_{dec}(s)}{s} \cdot \left[ r(s) - r_{ref}(s) \right], \; n_{dec}(s) = 1 + \frac{\ell_{DP} - \ell_F}{v} \cdot s \, . \tag{4}$$

Es wurde hergeleitet aus der Bedingung, dass die Querbeschleunigung $a_{yDP}$ nicht mehr von der Gierrate $r$ abhängt und damit die Fahreraufgabe der Spurführung über die Querbeschleunigung $a_{yDP}$ von der Aufgabe Gierstabilisierung des Fahrer-Unterstützungssystems entkoppelt ist. Das Regelgesetz (4) bewirkt eine symbolische Faktorisierung des charakteristischen Polynoms des geschlossenen entkoppelten Regelkreises.

$$p(s) = p_{lat}(s) \cdot p_{yaw}(s) , \qquad (5)$$

$$p_{lat}(s) = s + \frac{\mu \cdot c_F \cdot \ell}{m \cdot v \cdot \ell_R} , \qquad (6)$$

$$p_{yaw}(s) = s^2 + \frac{\mu \cdot c_R (\ell_{DP} + \ell_R)}{m \cdot v \cdot \ell_{DP}} \cdot s + \frac{\mu \cdot c_R}{m \cdot \ell_{DP}} . \qquad (7)$$

Aus dem Vergleich mit

$$p_{yaw}(s) = s^2 + 2 \cdot D_{dec} \cdot \omega_{0dec} \cdot s + \omega_{0dec}^2 \qquad (8)$$

ergeben sich natürliche Frequenz $\omega_{0dec}$ und Dämpfung $D_{dec}$ des robust entkoppelten Systems zu

$$\omega_{0dec} = \frac{\mu \cdot c_R}{m \cdot \ell_{DP}} \quad \text{und} \qquad (9)$$

und

$$D_{dec} = \frac{\ell_R + \ell_{DP}}{2 \cdot v} \cdot \sqrt{\frac{\mu \cdot c_R}{m \cdot \ell_{DP}}} . \qquad (10)$$

Ein typischer Verlauf der geschwindigkeitsabhängigen Gierdämpfung $D_{dec}(v)$ ist in Figur 2 dargestellt. Darin ist die bei höheren Geschwindigkeiten gegenüber dem konventionellen Fahrzeug ($D_{conv}$) verminderte Dämpfung zu erkennen. Sie wird mit der erfindungsgemäßen weiteren Rückführung von $r$ nach $\delta_S$ auf einen beliebig vorgebbaren Verlauf $D_{des}(v)$ angehoben, wobei die Faktorisierung des charakteristischen Polynoms nach (5) erhalten bleibt. Es wird lediglich der Dämpfungsterm in $p_{yaw}(s)$ nach (8) verändert. Entscheidend ist, dass andere Größen, die die Eigenschaften des Fahrzeugs um die Gierachse betreffen, dabei unverändert bleiben. Insbesondere soll die Faktorisierung des charakteristischen Polynoms (5) und darin das Teilpolynom $p_{lat}(s)$ unverändert bleiben ($p_{lat}(s)$ geht in die Dynamik ein, mit der der Fahrer eine gewünschte Querbeschleunigung z.B. bei einem Spurwechsel auf der Autobahn kommandiert, außerdem bleibt die natürliche Frequenz $\omega_{0dec}$ nach (9) unverändert).

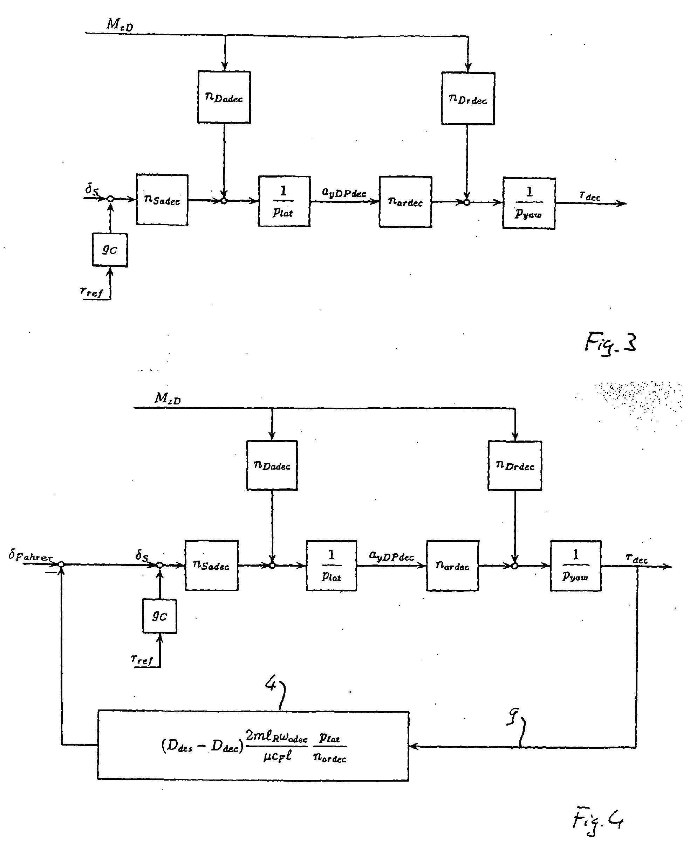

Der Zusammenhang der Variablen des robust entkoppelten Systems wird durch Figur 3 veranschaulicht.

Die Zähler-Polynome der Übertragungsfunktion berechnen sich zu

$$n_{Sadec}(s) = \frac{s \cdot \mu \cdot c_F \cdot \ell}{m \cdot \ell_R} ,$$

$$n_{Dadec}(s) = \frac{s}{m \cdot \ell_R} \; ,$$

$$n_{ardec}(s) = \left( s + \frac{\mu \cdot c_R \cdot \ell}{m \cdot v \cdot \ell_F} \right) \cdot \frac{\ell_F}{\ell \cdot \ell_{DP}} \; , \qquad (11)$$

$$n_{Drdec}(s) = \frac{s}{m \cdot \ell \cdot \ell_{DP}} \; .$$

Während in EP 0 846 610 nur eine einfache Kürzung von $p_{\ell at}(s)$ vorgenommen wurde, besteht die neue Erfindung in der Doppelkürzung von $n_{ardec}(s) / p_{\ell at}(s)$ gemäß dem Blockschaltbild von Figur 4.

Das charakteristische Polynom des geschlossenen Kreises ist nun

$$p(s) = p_{\ell at}(s) \cdot n_{ardec}(s) \cdot \left[ p_{yaw}(s) + \left( D_{des}(v) - D_{dec}(v) \right) \cdot \frac{2 \cdot m \cdot \ell_R}{\mu \cdot c_F \cdot \ell} \cdot \omega_{0dec} \cdot n_{Sadec}(s) \right] \; .$$

$$(12)$$

Die Faktoren $p_{\ell at}(s)$ und $n_{ardec}(s)$ sind stabile Polynome ersten Grades und der Term in eckigen Klammern wird durch Einsetzen von $p_{yaw}(s)$ nach (8) und $n_{Sadec}(s)$ nach (11).

$$s^2 + 2 \cdot D_{dec}(v) \cdot \omega_{0dec} \cdot s + \omega_{0dec}^2 + \left( D_{des}(v) - D_{dec}(v) \right) \cdot \frac{2 \cdot m \cdot \ell_R}{\mu \cdot c_F \cdot \ell} \cdot \omega_{0dec} \cdot \frac{\mu \cdot c_F \cdot \ell}{m \cdot \ell_R} \cdot s$$

$$= s^2 + 2 \cdot D_{des}(v) \cdot \omega_{0dec} \cdot s + \omega_{0dec}^2 \; .$$

$$(13)$$

Gleichung (13) zeigt, dass tatsächlich in $p_{yaw}(s)$ nur die Dämpfung $D_{dec}(v)$ des robust entkoppelten Systems durch die beliebig vorgebbare Dämpfung $D_{des}(v)$ ersetzt wird, $\omega_{0dec}$ und $p_{\ell at}(s)$ bleiben dagegen unverändert.

Der dynamische Anteil des Reglers, der die Kürzung bewirkt, ist

$$\frac{p_{\ell at}(s)}{n_{ardec}(s)} = \frac{s + \dfrac{\mu \cdot c_F \cdot \ell}{m \cdot v \cdot \ell_R}}{\left( s + \dfrac{\mu \cdot c_R \cdot \ell}{m \cdot v \cdot \ell_F} \right) \cdot \dfrac{\ell_F}{\ell \cdot \ell_{DP}}} = K \cdot \frac{1 + T_R \cdot s}{1 + T_F \cdot s} \qquad (14)$$

mit

$$K := \ell \cdot \ell_{DP} \cdot \frac{c_F}{c_R}, \qquad (15)$$

$$T_R := \frac{m \cdot v \cdot \ell_R}{\mu \cdot c_F \cdot \ell} \quad \text{und} \qquad (16)$$

und

$$T_F := \frac{m \cdot v \cdot \ell_F}{\mu \cdot c_R \cdot \ell}. \qquad (17)$$

Dabei ist **K** nicht vom Betriebszustand abhängig, $T_R$ und $T_F$ sind von den unsicheren Parametern $v$ und $\mu\,/\,m$ abhängig. Die Abhängigkeit von $v$ kann während der Fahrt durch Anpassung an die bspw. mittels der ABS-Sensoren gemessene Fahrzeuggeschwindigkeit $v$ berücksichtigt werden. Für $\mu\,/\,m$ ist es naheliegend, vom ungünstigsten Fall (engl.: "Worst Case"), also minimaler Kraftschluss $\mu$ und maximale Masse $m$, auszugehen Es kann jedoch auch ein mittlerer Betriebsfall zugrundegelegt werden, wenn gleichzeitig beachtet wird, dass $D(v)$ auch im Worst Case mindestens die gleiche Dämpfung wie das konventionelle Fahrzeug liefert. Bei einem typischen untersteuernd ausgelegten Fahrzeug ist

$$c_R \cdot \ell_R - c_F \cdot \ell_F > 0, \quad \text{d. h.} \quad T_R > T_F,$$

es handelt sich bei (14) also um einen sogenannten Lead-Lag-Kompensator.

Selbstverständlich können aber auch bekannte Sensoren zur Erfassung von $m$ und $\mu$ verwendet werden.

Bei dem erfindungsgemäßen Verfahren wird also nicht nur der oben erwähnte Pol von $G_{\delta a}(s)$ gekürzt, sondern zusätzlich auch die Nullstelle der Übertragungsfunktion $G_{ar}(s)$ von der Querbeschleunigung $a_{yP}$ am Entkopplungspunkt zur Gierrate $r$. Durch diese Doppelkürzung wird erreicht, dass die geschwindigkeitsabhängige Gierdämpfung $D(v)$ im Entwurfsprozess durch den Entwurfsingenieur vorgegeben oder während der Fahrt durch den Fahrer oder eine automatische Fahrzeugsteuerung umgeschaltet werden kann, ohne dass sich andere Systemeigenschaften wie die natürliche Frequenz ändern. Die für die Handling-Eigenschaften wichtige Lage des Pols von $G_{\delta a}(s)$ bleibt wie in EP 0 846 610 invariant unter der Vorgabe von $D(v)$. Durch dieses Ergebnis erhält man eine besonders einfache Reglerstruktur und einen transparenten Entwurfsprozess im Hinblick auf den gewünschten Dämpfungsverlauf. Bei Fahrzeugen mit Vorder- und Hinterachslenkung war dies bisher schon möglich, gemäß der Erfindung besteht diese Möglichkeit nunmehr erstmals bei Fahrzeugen mit reiner Vorderachslenkung (bzw. Flugzeugen oder Schiffen mit einem Seitenruder, Raketen mit einer Strahlablenkung, etc.).

Bei der Vorgabe von $D_{des}(v)$ hat der Entwurfsingenieur die Möglichkeit, für niedrige Geschwindigkeiten $D_{des}(v) = D_{dec}(v)$ zu wählen und erst bei höheren Geschwindigkeiten die zusätzliche Dämpfung sanft zuzuschalten wie in Figur 2 angedeutet. Andererseits kann $D_{des}(v)$ auch unabhängig von $D_{dec}(v)$ nach Wunsch vorgegeben werden.

Schließlich kann die geschwindigkeitsabhängige Gierdämpfung $D(v)$ bspw. mittels einer Schnittstelle 8 der Steuereinheit durch den Fahrer (ggf. während der Fahrt) und/oder automatisch verändert werden. Gerade bei der Verstellung der Gierdämpfung (bspw. von "Sport" auf "Komfort") ist es besonders wichtig, das die übrigen Eigenschaften des Fahrzeugs bezüglich der Gierachse unverändert bleiben.

Die automatische Einstellung kann bspw. abhängig von dem Anhängen eines Anhängers an das Fahrzeug erfolgen. Die Querkräfte an der Kupplung werden als Störmomente betrachtet. Automatisch beim Erfassen des Ankoppelns und insbesondere wenn übermäßige Störmomente an der Kupplung erfasst werden, kann das Gierverhalten bewusst überdämpft werden.

Die Erzeugung von $r_{ref}$ in Figur 3 und 4 aus dem Lenkradwinkel und der Fahrzeuggeschwindigkeit $v$ kann bspw. wie in EP 0 846 610 erfolgen. Auch die dort angegebene Kombination mit einen Kurzzeitintegrator anstelle des Integrators der robust entkoppelnden Regelung ist empfehlenswert.

Wie bereits eingangs erwähnt liegt eine Anwendung der Erfindung im Bereich Automobilbau und zwar sowohl bei fahrergesteuerten wie auch bei automatisch fahrenden Fahrzeugen. Das gleiche Problem tritt aber auch bei anderen Fahrzeugen auf und kann dort mit den gleichen Mitteln gelöst werden. Bei einem Schiff oder Flugzeug oder einer Rakete entspricht der Ruderausschlag bzw. die Strahlablenkung dem Vorderradeinschlag des Autos. Die Bewegungsgleichungen für die Drehraten und Querbeschleunigungen sind im Prinzip unverändert.

Auch bei diesen Anwendungen ist die Möglichkeit einer gezielten Vorgabe des Dämpfungsverlaufs $D(v)$ ohne Beeinflussung weiterer Parameter des Verhaltens des Fahrzeugs um die entsprechende Achse von Interesse.

**Patentansprüche**

1. Geregelte Einrichtung zur Steuerung des dynamischen Verhaltens eines Fahrzeugs um eine definierte Achse, aufweisend:

   - ein Betätigungsorgan (1) zum Ansteuern eines verstellbaren Hauptsteuerelements (10) durch einen Benutzer, wobei das Betätigungsorgan (1) mit dem Steuerelement (10) durch einen Steuerübertragungsstrang (2) verbunden ist und das Steuerelement (10) das Verhalten des Fahrzeugs um die definierte Achse beeinflusst,
   - einen Sensor (3) zur Erfassung der Drehrate des Fahrzeugs um die definierte Achse,
   - einen Sensor (7) zur Erfassung eines für die Stellung des Betätigungsorgans (1) repräsentativen Stellsignals,
   - einen Sensor (6) zur Erfassung der Fahrzeuggeschwindigkeit, und
   - einen Regler (4), dem ein Ausgangssignal vom dem Sensor (6) zur Erfassung der Fahrzeuggeschwindigkeit zugeführt wird und der ein Signal, das von der erfassten Drehrate abhängt, auf den Steuerübertragungsstrang (2) zurückführt,

   **dadurch gekennzeichnet,**
   **dass** der Regler (4) eine Einstellungsfunktion für die geschwindigkeitsabhängige Dämpfung der Bewegung des Fahrzeugs um die definierte Achse unabhängig von den übrigen Eigenschaften des Fahrzeugs um diese definierte Achse aufweist.

2. Geregelte Einrichtung nach Anspruch 1,
   **dadurch gekennzeichnet,**
   **dass** der Regler (4) dazu ausgelegt ist, eine Anhebung der geschwindigkeitsabhängigen Dämpfung der Bewegung des Fahrzeugs um die definierte Achse zumindest in einem höheren Geschwindigkeitsbereich einzustellen.

3. Geregelte Einrichtung nach einem der vorhergehenden Ansprüche,
   **dadurch gekennzeichnet,**
   **dass** der Regler (4) zumindest im wesentlichen für eine Entkopplung der Querbeschleunigung des Fahrzeugs senkrecht zu der definierten Achse von der Drehung des Fahrzeugs in einem Entkopplungspunkt sorgt und sowohl

   - den Pol der Übertragungsfunktion der Stellung des Steuerelements (10) zur Querbeschleunigung am Entkopplungspunkt
   - wie auch die Nullstelle der Übertragungsfunktion von der Querbeschleunigung am Entkopplungspunkt zu der Drehrate um die vorbestimmte Achse kürzt.

4. Geregelte Einrichtung nach einem der vorhergehenden Ansprüche,
   **dadurch gekennzeichnet,**
   **dass** der Regler (4) eine Benutzerschnittstelle (8) aufweist, mittels der ein Benutzer den Verlauf der geschwindigkeitsabhängigen Dämpfung der Bewegung des Fahrzeugs um die definierte Achse gezielt verändern kann.

5. Geregelte Einrichtung nach einem der vorhergehenden Ansprüche,
   **dadurch gekennzeichnet,**
   **dass** der Regler (4) einen Eingang (8) aufweist, mittels dem der Verlauf der geschwindigkeitsabhängigen Dämpfung abhängig von einem erfassten Ereignis automatisch veränderbar ist.

6. Geregelte Einrichtung nach Anspruch 5,
   **dadurch gekennzeichnet,**
   **dass** das Ereignis ein Ankoppeln eines Anhängers an das Fahrzeug ist.

7. Geregelte Einrichtung nach einem der vorhergehenden Ansprüche,
**dadurch gekennzeichnet,**
**dass** die Rückführung des Regler-Signals auf den Steuerübertragungsstrang mechanisch mittels eines Überlagerungsgetriebes oder elektrisch mittels eines Steer-by-wire-Aktuators erfolgt.

8. Geregelte Einrichtung nach einem der vorhergehenden Ansprüche,
**dadurch gekennzeichnet,**
**dass** das Betätigungsorgan ein Steuereingang im Rahmen einer automatischen Fahrzeugführung ist.

9. Geregelte Einrichtung nach einem der Ansprüche 1 bis 8,
**dadurch gekennzeichnet,**
**dass** das Betätigungsorgan ein von einem Benutzer betätigtes Organ ist.

10. Vorderachs-Lenkeinrichtung für ein Straßenfahrzeug,
**dadurch gekennzeichnet,**
**dass** sie eine geregelte Einrichtung nach einem der vorhergehenden Ansprüche zur Steuerung des dynamischen Gierverhaltens eines Straßenfahrzeugs aufweist.

11. Verwendung einer geregelten Einrichtung nach einem der vorhergehenden Ansprüche zur Steuerung des dynamischen Gierverhaltens eines Straßenfahrzeugs mit reiner Vorderachslenkung.

12. Verfahren zur Steuerung des dynamischen Verhaltens eines Fahrzeugs um eine definierte Achse, wobei:

   - ein Betätigungsorgan (1) ein verstellbares Hauptsteuerelement (10) ansteuert, wobei das Betätigungsorgan (1) mit dem Steuerelement (10) durch einen Steuerübertragungsstrang (2) verbunden ist und das Steuerelement (10) das Verhalten des Fahrzeugs um die definierte Achse beeinflusst,
   - die Drehrate des Fahrzeugs um die definierte Achse erfasst (3) wird,
   - ein für die Stellung des Betätigungsorgans (1) repräsentatives Stellsignal erfasst (7) wird,
   - ein für die Fahrzeuggeschwindigkeit repräsentatives Signal erfasst wird, und
   - ein Signal, das von der erfassten Drehrate und der erfassten Fahrzeuggeschwindigkeit abhängt, auf den Steuerübertragungsstrang (2) zurückgeführt (9) wird,

   **dadurch gekennzeichnet,**
   **dass** mittels der Rückführung (9) die geschwindigkeitsabhängige Dämpfung der Bewegung des Fahrzeugs um die definierte Achse unabhängig von den übrigen Eigenschaften des Fahrzeugs um diese definierte Achse eingestellt wird.

13. Verfahren nach Anspruch 12,
**dadurch gekennzeichnet,**
**dass** die geschwindigkeitsabhängige Dämpfung der Bewegung des Fahrzeugs um die definierte Achse zumindest in einem höheren Geschwindigkeitsbereich zumindest auf den Betrag der Dämpfung des ungeregelten Fahrzeugs angehoben wird.

14. Verfahren nach Anspruch 12 oder 13,
**dadurch gekennzeichnet,**
**dass** die Rückführung (9) im wesentlichen für eine Entkopplung der Querbeschleunigung des Fahrzeugs senkrecht zu der definierten Achse von der Drehung des Fahrzeugs in einem Entkopplungspunkt sorgt und sowohl

   - der Pol der Übertragungsfunktion der Stellung des Steuerelements zur Querbeschleunigung am Entkopplungspunkt,
   - wie auch die Nullstelle der Übertragungsfunktion von der Querbeschleunigung am Entkopplungspunkt zu der Drehrate um die vorbestimmte Achse im wesentlichen kürzt.

15. Verfahren nach einem der Ansprüche 12 bis 14,
**dadurch gekennzeichnet,**
**dass** während der Fahrt des Fahrzeugs der Verlauf der geschwindigkeitsabhängigen Dämpfung der Bewegung des Fahrzeugs um die definierte Achse gezielt verändert wird.

**16.** Verfahren nach einem der Ansprüche 12 bis 15,
**dadurch gekennzeichnet,**
**dass** der Verlauf der geschwindigkeitsabhängigen Dämpfung abhängig von einem erfassten Ereignis (8) automatisch verändert wird.

**17.** Verfahren nach einem der Ansprüche 12 bis 16,
**dadurch gekennzeichnet,**
**dass** die Rückführung auf den Steuerübertragungsstrang (2) mechanisch mittels eines Überlagerungsgetriebes oder elektrisch mittels eines Steer-by-wire-Aktuators erfolgt.

**18.** Verfahren nach einem der Ansprüche 12 bis 17,
**dadurch gekennzeichnet,**
**dass** als Betätigungsorgan ein Steuereingang einer automatischen Fahrzeugführung verwendet wird.

**19.** Verfahren nach einem der Ansprüche 12 bis 17,
**dadurch gekennzeichnet,**
**dass** als Betätigungsorgan ein von einem Benutzer betätigtes Organ verwendet wird.

**Claims**

**1.** Regulated device for the control of the dynamic behaviour of a vehicle around a defined axis, having:

- an actuation member (1) for the control of an adjustable main control element (10) by a user, wherein the actuation member (1) is connected by a control transmission chain (2) with the control element (10) and the control element (10) influences the behaviour of the vehicle around the defined axis,
- a sensor (3) for the detection of the rate of rotation of the vehicle around the defined axis,
- a sensor (7) for the detection of a position signal representative of the position of the actuation member (1),
- a sensor (6) for the detection of the vehicle speed, and
- a regulator (4) to which there is delivered an output signal from the sensor (6) for the detection of the vehicle speed and which returns a signal, which depends on the detected rate of rotation, via the control transmission chain (2),

**characterized in that**,
the regulator (4) has a setting function for the speed-dependent damping of the movement of the vehicle around the defined axis independently of the other characteristics of the vehicle around this defined axis

**2.** Regulated device according to claim 1,
**characterized in that**,
the regulator (4) is constituted to set an increase in the speed dependent damping of the movement of the vehicle around the defined axis at least in a higher speed range.

**3.** Regulated device according to any preceding claim,
**characterized in that**,
the regulator (4) provides at least in substance for a decoupling of the transverse acceleration of the vehicle perpendicular to the defined axis from the rotation of the vehicle in a decoupling point and both cuts

- the pole of the transfer function of the position of the control element (10) to the transverse acceleration at the decoupling point
- and also the zero point of the transfer function of the transverse acceleration at the decoupling point to the rate of rotation around the predetermined axis.

**4.** Regulated device according to any preceding claim,
**characterized in that**,
the regulator (4) has a user interface (8) by means of which a user can purposively change the development of the speed dependent damping of the movement of the vehicle around the defined axis.

**5.** Regulated device according to any preceding claim,

**characterized in that**,
the regulator (4) has an input (8) by means of which the development of the speed dependent damping is changeable automatically in dependence upon a detected event.

6. Regulated device according to claim 5,
   **characterized in that**,
   the event is a coupling of a trailer to the vehicle.

7. Regulated device according to any preceding claim,
   **characterized in that**,
   the return of the regulator signal is effected mechanically on the control transmission train by means of an overriding transmission or electrically by means of a Steer-By-Wire actuator.

8. Regulated device according to any preceding claim,
   **characterized in that**,
   the actuation member is a control input within the scope of an automatic vehicle control.

9. Regulated device according to any of claims 1 to 8,
   **characterized in that**,
   the actuation member is an member actuated by a user.

10. Front axle steering device for a road vehicle,
    **characterized in that**,
    it has a regulated device according to any of the preceding claims for the control of the dynamic yaw behaviour of a road vehicle.

11. Use of a regulated device according to any preceding claim for the control of the dynamic yaw behaviour of a road vehicle with solely front axle steering.

12. Method for the control of the dynamic behaviour of a vehicle around a defined axis wherein:

    - an actuation member (1) controls an adjustable main control element (10), wherein the actuation member (1) is connected by a control transmission chain (2) with the control element (10) and the control element (10) influences the behaviour of the vehicle around the defined axis,
    - the rate of rotation of the vehicle around the defined axis (3) is detected,
    - a position signal representative of the position of the actuation member (1) is detected(7),
    - a signal representative of the vehicle speed is detected, and
    - a signal which depends on the detected rate of rotation and the detected vehicle speed is returned (9) on the control transmission chain (2),

    **characterized in that**,
    by means of the return (9) the damping of the movement of the vehicle around the defined axis is set independently of the other characteristics of the vehicle around the defined axis.

13. Method according to claim 12,
    **characterized in that**,
    the speed dependent damping of the movement of the vehicle around the defined axis is raised at least in a higher speed range at least to the amount of the damping of the unregulated vehicle.

14. Method according to claim 12 or 13,
    **characterized in that**,
    the return (9) provides in substance a decoupling of the transverse acceleration of the vehicle perpendicular to the defined axis from the rotation of the vehicle at a decoupling point and both substantially cuts

    - the pole of the transfer function of the position of the control element to the transverse acceleration at the decoupling point,
    - and also the zero point of the transfer function of the transverse acceleration at the decoupling point to the rate of rotation around the predetermined axis.

**15.** Method according to any of claims 12 to 14,
**characterized in that**,
that during the travel of the vehicle the development of the speed dependent damping of the movement of the vehicle around the defined axis is purposively changed.

**16.** Method according to anyof claims 12 to 15,
**characterized in that**,
that the development of the speed dependent damping is automatically changed in dependence upon a detected event (8).

**17.** Method according to any of claims 12 to 16,
**characterized in that**,
that the return is carried out mechanically on the control transmission chain (2) by means of an overriding transmission or electrically by means of a Steer-By-Wire actuator.

**18.** Method according to any of claims 12 to 17,
**characterized in that**,
a control input of an automatic vehicle control system is used as actuation member.

**19.** Method according to any of claims 12 to 17,
**characterized in that**,
a member operated by a user is employed as actuation member.

**Revendications**

**1.** Dispositif asservi pour la commande de comportement dynamique d'un véhicule autour d'un axe défini, comprenant :

- un élément d'actionnement (1) pour la commande d'un élément de commande principale réglable (10) par un utilisateur, ledit élément d'actionnement (1) étant relié par une transmission de commande (2) à l'élément de commande (10), et l'élément de commande (10) influençant le comportement du véhicule autour de l'axe défini,
- un capteur (3) pour la saisie de la vitesse de rotation du véhicule autour de l'axe défini,
- un capteur (7) pour la saisie d'un signal de réglage représentatif de la position de l'élément d'actionnement (1),
- un capteur (6) pour la saisie de la vitesse du véhicule, et
- un régulateur (4) auquel est délivré un signal initial du capteur (6) pour la saisie de la vitesse du véhicule, et qui retourne un signal dépendant de la vitesse de rotation saisie à la transmission de commande (2),

**caractérisé en ce que**
le régulateur (4) comporte une fonction de réglage pour l'amortissement de mouvement du véhicule autour de l'axe défini en fonction de la vitesse, indépendamment des autres propriétés du véhicule autour de cet axe défini.

**2.** Dispositif asservi selon la revendication 1,
**caractérisé en ce que**
le régulateur (4) est conçu pour régler un accroissement de l'amortissement de mouvement du véhicule autour de l'axe défini en fonction de la vitesse, au moins dans une plage de vitesse supérieure.

**3.** Dispositif asservi selon l'une des revendications précédentes,
**caractérisé en ce que**
le régulateur (4) exécute, au moins sensiblement, un découplage sur un point de découplage de l'accélération transversale du véhicule perpendiculairement à l'axe défini d'avec la rotation du véhicule, et raccourcit

- le pôle de la fonction de transmission de position de l'élément de commande (10) à l'accélération transversale sur le point de découplage
- ainsi que la position zéro de la fonction de transmission de l'accélération transversale sur le point de découplage à la vitesse de rotation autour de l'axe défini.

**4.** Dispositif asservi selon l'une des revendications précédentes,
**caractérisé en ce que**

le régulateur (4) comporte une interface d'utilisateur (8) au moyen de laquelle un utilisateur peut modifier précisément la courbe de l'amortissement de mouvement du véhicule autour de l'axe défini en fonction de la vitesse.

5. Dispositif asservi selon l'une des revendications précédentes,
   **caractérisé en ce que**
   le régulateur (4) comporte une entrée (8) au moyen de laquelle la courbe de l'amortissement de mouvement du véhicule autour de l'axe défini en fonction de la vitesse est automatiquement modifiée suite à un événement détecté.

6. Dispositif asservi selon la revendication 5,
   **caractérisé en ce que**
   l'événement est l'accouplement d'une remorque au véhicule.

7. Dispositif asservi selon l'une des revendications précédentes,
   **caractérisé en ce que**
   le retour du signal de régulateur à la transmission de commande est mécaniquement exécuté au moyen d'un engrenage de superposition, ou électriquement au moyen d'un actionneur « steer-by-wire ».

8. Dispositif asservi selon l'une des revendications précédentes,
   **caractérisé en ce que**
   l'élément d'actionnement est une entrée de commande dans le cadre d'un guidage automatique du véhicule.

9. Dispositif asservi selon l'une des revendications 1 à 8,
   **caractérisé en ce que**
   l'élément d'actionnement est un élément activé par un utilisateur.

10. Dispositif de direction d'un essieu avant pour un véhicule routier,
    **caractérisé en ce que** ledit dispositif comporte un dispositif asservi selon l'une des revendications précédentes pour la commande du comportement dynamique en lacet d'un véhicule routier.

11. Utilisation d'un dispositif asservi selon l'une des revendications précédentes pour la commande du comportement dynamique en lacet d'un véhicule routier, avec une direction exclusive d'essieu avant.

12. Procédé pour la commande du comportement dynamique d'un véhicule autour d'un axe défini, où :

     - un élément d'actionnement (1) commande un élément de commande principale réglable (10), ledit élément d'actionnement (1) étant relié par une transmission de commande (2) à l'élément de commande (10), et l'élément de commande (10) influençant le comportement du véhicule autour de l'axe défini,
     - la vitesse de rotation du véhicule autour de l'axe défini est saisie (3),
     - un signal de réglage représentatif de la position de l'élément d'actionnement (1) est saisi (7),
     - un signal représentatif de la vitesse du véhicule est saisi, et
     - un signal dépendant de la vitesse de rotation saisie et de la vitesse de véhicule saisie est retourné à la transmission de commande (2),

     **caractérisé en ce qu'**
     au moyen du retour (9), l'amortissement de mouvement du véhicule autour de l'axe défini en fonction de la vitesse est réglé indépendamment des autres propriétés du véhicule autour de cet axe défini.

13. Procédé selon la revendication 12,
    **caractérisé en ce que**
    l'amortissement de mouvement du véhicule autour de l'axe défini en fonction de la vitesse est au moins dans une plage de vitesse supérieure élevé au moins vers la valeur de l'amortissement du véhicule non régulé.

14. Procédé selon la revendication 12 ou 13,
    **caractérisé en ce que**
    le retour (9) exécute essentiellement un découplage sur un point de découplage de l'accélération transversale du véhicule perpendiculairement à l'axe défini d'avec la rotation du véhicule, et raccourcit sensiblement

    - le pôle de la fonction de transmission de position de l'élément de commande à l'accélération transversale sur le point de découplage
- ainsi que la position zéro de la fonction de transmission de l'accélération transversale sur le point de découplage à la vitesse de rotation autour de l'axe défini.

**15.** Procédé selon l'une des revendications 12 à 14,
**caractérisé en ce que**
pendant la conduite du véhicule, la courbe de l'amortissement de mouvement du véhicule autour de l'axe défini en fonction de la vitesse est précisément modifiée.

**16.** Procédé selon l'une des revendications 12 à 15,
**caractérisé en ce que**
la courbe de l'amortissement en fonction de la vitesse est automatiquement modifiée en fonction d'un événement détecté (8).

**17.** Procédé selon l'une des revendications 12 à 16,
**caractérisé en ce que**
le retour à la transmission de commande (2) est mécaniquement exécuté au moyen d'un engrenage de superposition, ou électriquement au moyen d'un actionneur « steer-by-wire ».

**18.** Procédé selon l'une des revendications 12 à 17,
**caractérisé en ce qu'**
une entrée de commande d'un guidage automatique du véhicule est utilisée comme élément d'actionnement.

**19.** Procédé selon l'une des revendications 12 à 17,
**caractérisé en ce qu'**
un élément activé par un utilisateur est utilisé comme élément d'actionnement.

Fig. 1

Fig. 2

Fig. 3

Fig. 4